# DEMANDE DE BREVET EUROPEEN

(11) **EP 1 494 478 A1**
(43) Date de publication de la demande: **05.01.2005**
(21) Numéro de dépôt: 03380253.9
(22) Date de dépôt: 31.10.2003
(51) Int. Cl.: H04N 7/173, H04N 7/16

(54) **Système de télévision à péage pour complexes de multi-usagers**

(30) Priorité: 30.06.2003 ES 200301516
(71) Demandeur: Angel Iglesias S.A., 20014 San Sebastian (Gipuzkoa) (ES)
(72) Inventeur: Lopez Perez, Francisco Javier, 20014 San Sebastian (Gipuzkoa) (ES); Dominguez Bonini, Marco, 20014 San Sebastian (Gipuzkoa) (ES); Larzabal Lasaosa, Javier, 20014 San Sebastian (Gipuzkoa) (ES)
(74) Mandataire: Urizar Barandiaran, Miguel Angel

(57) **Abrégé**

Le système de télévision à péage pour complexes de multi-usagers, se compose d'une station en tête, modulaire, avec un certain nombre de paires récepteur-encodeur, de sources vidéo, d'un contrôleur central qui dirige en temps réel les services PPV et les décodeurs de pièce, qui contrôlent l'accès aux programmes à péage. Chaque décodeur a une adresse dans sa configuration, qui est utilisée par le système de gestion.

Le contact à partir de la pièce avec le contrôleur central a lieu grâce à un appel téléphonique sans nécessité de réponse vocale. Une fois la demande confirmée, le contrôleur central envoie les données d'autorisation d'accès au module encodeur de tête qui correspond à la chaîne choisie.

Applicable à l'industrie de la télévision.

## Description

Le système objet de l'invention est un système de télévision à péage de bas coût et grande sécurité s'adressant essentiellement à des hôtels, mais applicable également dans les complexes d'appartements, hôpitaux, institutions similaires. Il s'installe aisément sur des réseaux existants de distribution coaxiale de télévision et, bien que n'ayant pas été spécialement conçu pour se servir de canaux libres ou cryptés de TV satellite digitale comme source signal. il peut utiliser également des signaux d'origine diverse.

Le système sélectionne les chaînes de TV que l'on souhaite distribuer, il les traite et finalement les retransmet comme des chaînes cryptées, par exemple sur la bande de 45-862 MHz. Ces chaînes sont à la disposition du client en même temps que les chaînes en clair de l'installation SMATV. L'ensemble des chaînes distribuées se divise en:
a) Chaînes gratuites: le client peut les regarder sans aucun coût et à otout instant. Ce sont normalement celles que fournit le système SMATV existant.
b) Chaînes à péage: le client peut les regarder, mais en payant pour cela. Ce sont celles qui sont propres au système de télévision à péage.

Le système se compose d'une station modulaire en tête avec un certain nombre de paires récepteur-décodeur (une paire par chaîne), sources vidéo plus leur encodeur, modulateurs, un contrôleur central qui dirige en temps réel les services PPV et les décodeurs de pièce qui contrôlent l'accès aux programmes à péage. Chaque décodeur a configuré une adresse qui est utilisée par le système de gestion.

Le contact depuis la pièce avec le contrôleur central a lieu grâce à un appel téléphonique sans nécessité de réponse vocale : le client compose le numéro de standard qui lui est indiqué sur l'écran et suit les instructions que lui indique l'opérateur automatique. Les numéros et l'information additionnelle (titre, horaire, coût) auront été affichés sur l'écran ap'res une brève présentation en clair de la chaîne/programme. Une fois la demande confirmée, le contrôleur central envoie les données d'autorisation d'accès au module encodeur de tête qui correspond à la chaîne choisie. Les procédures de demande, d'accès et de facturation sont totalement automatiques, le système n'exigeant l'intervention humaine que pour restreindre l'accès absolu à des programmes pour adultes, lorsqu'il y aura des enfants dans la pièce et pour effectuer le check-out ou générer une facture.

L'utilisation de la ligne téléphonique par l'usager évite la nécessité d'une voie de retour de radiofréquence (R.F.) de la part des décodeurs.

Plus concrètement, le système de télévision à péage pour complexes de multi-usagers objet de l'invention se caractérise par le fait qu'il se compose de:
a) une station en tête, modulaire, à laquelle arrivent les signaux des sources vidéo et qui se compose d'un bloc d'encodeurs et d'un bloc de modulateurs formant des paires pour chaque signal vidéo avec un encodeur et un modulateur, chaque paire étant à l'origine d'un signal de radiofréquence avec des messages d'information, un code d'autorisation, qui comprend un code d'autorisation et de contrôle, ces signaux de radiofréquence étant envoyés à
b) un mélangeur qui les envoie à
c) un réseau câblé propre au complexe de multi-usagers par lequel ils arrivent à
d) chaque pièce de l'usager, à un poste de télévision où apparaissent les messages d'informations, un décodeur, configuré avec sa propre adresse par décodeur, étant connecté au poste de TV;
e) L'usager se met en rapport téléphonique avec un standard qui se compose d'un automate parlant à réponse interactive téléphonique et confirme sa demande, qui est reçue par un processeur central qui envoie l'autorisation d'accès avec les données d'identification du décodeur de l'usager et de la demande faite, à l'encodeur de la station en tête qui correspond à la demande faite.

Pour mieux comprendre l'objet de la présente invention, on a représenté sur les plans une forme préférentielle de réalisation pratique, susceptible de changements accessoires qui n'en dénaturent pas le fondement.

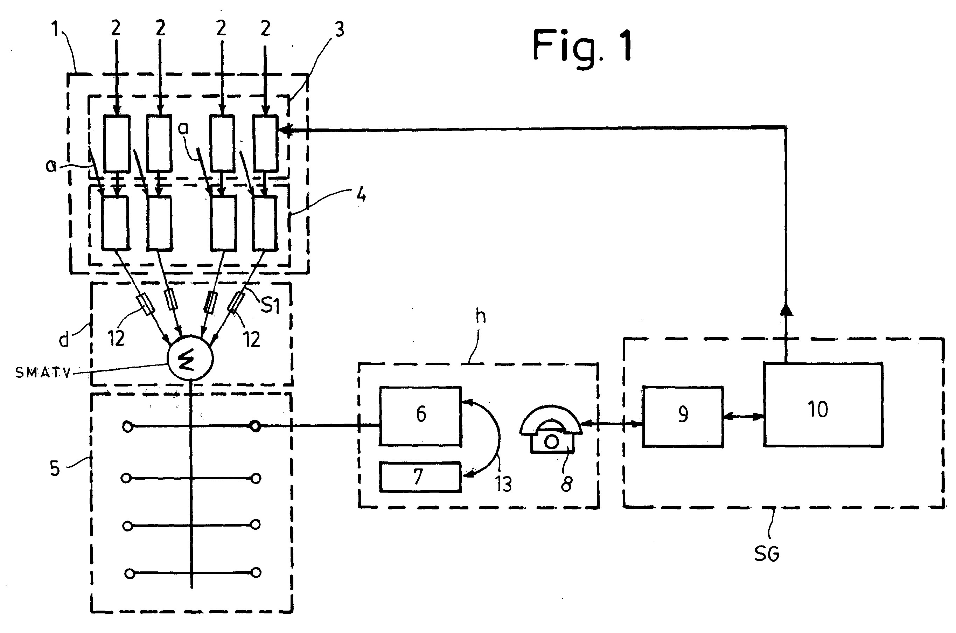

La figure 1 est une représentation en blocs d'une réalisation pratique du système qui fait l'objet de l'invention.

On décrit ci-dessous un exemple de réalisation pratique, non limitative, de la présente invention.

Sur la figure 1, on apprécie quatre grands blocs propres au système: tête (1), distribution du signal (d), pièce ou point de l'usager (h), système de gestion (SG), le cinquième étant l'installation câblée (5) qui est déjà implantée à l'hôtel, l'appartement, l'hôpital, etc, où il s'agit d'installer le système objet de l'invention.

Les sources vidéo (2) peuvent être des modules récepteurs de TV-Sat. Digital cryptée, des modules récepteurs TV-Sat. Digital à canaux libres, des modules récepteurs TV-Terrestre Digital à canaux libres, etc., etc.

La station en tête (1) peut être composée de n'importe quel système fournissant un signal vidéo analogique. Dans ce cas, elle se compose d'un bloc d'encodeurs (3), dans lequel chaque encodeur crypte le signal vidéo correspondant et le fait sortir par une sortie vidéo analogique, associés par paires aux modulateurs d'un bloc de modulateurs (4) qui admettent également l'entrée de signaux audio (a). Dans la station en tête (1), sont générés des signaux (S₁) de multicanal TV codés porteurs de messages d'information pour l'usager, comme le nom du paquet, le prix, l'heure et un code d'autorisation et de contrôle.

Les signaux (S₁) reçus dans le bloc distributeur du signal (d) sont amplifiés (12) et mélangés dans un mélangeur (E) où ils se combinent avec le signal existant de SMATV des chaînes gratuites.

Les signaux sont distribués dans les pièces (h) des usagers au moyen du réseau câblé (5) propre à l'établissement.

Dans chaque pièce (h) ou point préalablement établi, on dispose un poste TV (6) qui, au moyen d'un euroconnecteur (13) est relié à un décodeur (7) qui décrypte le signal crypté.

Le décodeur (7) dispose d'un DIP-Switch pour donner une adresse à chacune des pièces et son propre code d'identification. Avec cette adresse et avec le code du programme à demander, on créera un code unique pour procéder à la demande.

Dans la pièce (h), on dispose du téléphone corresdpondant (8) qui fonctionne de préférence à travers des tons (MF) pour communiquer avec le système de gestion (SG) qui comprend un processeur central avec son logiciel correspondant.

L'usager se met en rapport avec un standard (9) qui dispose d'une carte de voix ou d'un automate parlant qui donne automatiquement des réponses aux messages envoyés par l'usager, par exemple avec option à plusieurs langues.

Le système de gestion (SG) dispose d'un logiciel de gestion (10) qui transmet/valide la demande de l'usager, identifie l'objet de la demande, fournit le code d'identification du décodeur (7) de l'usager demandeur, assigne tout autre code nécessaire, procède à la facturation, etc.

Le système de gestion (SG) avec ce logiciel autorise l'action de l'encodeur (3) correspondant à la source vidéo (2) demandée par l'usager.

Le signal (S₁) de sortie correspondant à la station en tête (1) comporte maintenaint l'autorisation cryptée, par exemple avec le numéro de pièce de l'usager et le code d'identification du décodeur (7) de l'usager demandeur.

Le produit est servi.

## Revendications

1. Système de télévision à péage pour complexes de multi-usagers, **se caractérisant par le fait qu'**il se compose de:
a) une station en tête, modulaire (1) à laquelle arrivent les signaux de sources vidéo (2) et qui se compose d'un bloc d'encodeurs (3) et d'un bloc de modulateurs (4), des paires se formant pour chaque signal vidéo avec un encodeur et un modulateur, à l'origine, pour chaque paire, d'un signal de radiofréquence (S₁) avec des messages d'information, un code d'autorisation qui comprend un code d'autorisation et de contrôle, ces signaux de radiofréquence (S₁) étant envoyés à
b) un mélangeur (E) qui les envoie à
c) un réseau câblé (5) propre au complexe de multi-usagers par lequel ils arrivent à
d) chaque pièce d'usager (h) à un poste de télévision (6) où apparaissent les messages d'information, un décodeur (7) configuré avec sa propre adresse par décodeur (7) étant connecté au poste de TV (6);
e) l'usager se met en rapport téléphonique (8) avec un standard (9) qui se compose d'un automate parlant à réponse interactive téléphonique et qui confirme la demande reçue par un processeur central qui envoie l'autorisation d'accès avec les données d'identification du décodeur (7) de l'usager et de la demande faite, à l'encodeur (3) de la station en tête, qui correspond à la demande faite.
